# EUROPÄISCHE PATENTSCHRIFT

(11) **EP 4 013 991 B1**
(45) Veröffentlichungstag und Bekanntmachung des Hinweises auf die Patenterteilung: **27.09.2023**
(21) Anmeldenummer: 20736943.0
(22) Anmeldetag: 25.06.2020
(51) Int. Cl.: F17C 13/04

(54) **SYSTEM ZUR DRUCKENTLASTUNG EINES DRUCKBEHÄLTERS**
SYSTEM FOR RELEASING PRESSURE IN A PRESSURE VESSEL
SYSTÈME DE LIBÉRATION DE PRESSION DANS UN RÉCIPIENT SOUS PRESSION

(30) Priorität: 12.08.2019 DE 102019212037
(43) Veröffentlichungstag der Anmeldung: 22.06.2022
(73) Patentinhaber: Robert Bosch GmbH, 70442 Stuttgart (DE)
(72) Erfinder: SCHILD, Johannes, 74232 Abstatt (DE)
(86) Internationale Anmeldenummer: PCT/EP2020/067810
(87) Internationale Veröffentlichungsnummer: WO 2021/028104

(56) Entgegenhaltungen:
- WO-A1-2006/093060
- DE-A1-102013 018 779
- DE-A1-102014 215 719

## Beschreibung

Die vorliegende Erfindung geht aus von einem System sowie einem Verfahren zur Druckentlastung eines Druckbehälters. Ferner umfasst die Erfindung ein Kraftfahrzeug, umfassend ein System zur Druckentlastung eines Druckbehälters.

### Stand der Technik

Druckbehälter zur Aufnahme von Treibstoffen sind aus dem Stand der Technik bekannt und werden insbesondere in Kraftfahrzeugen eingesetzt. Vor allem bei Treibstoffen in Form von Gasen, wie beispielsweise Wasserstoff wird der Treibstoff hierbei unter hohen Drücken gelagert. Bei bekannten Wasserstoffanwendungen wird der Treibstoff beispielsweise mit Drücken von 350 - 700 bar gespeichert. Bei steigender Temperatur, insbesondere bei einem Fahrzeugbrand, steigt der Tankdruck dann weiter an und kann zu einem Bersten des Druckbehälters führen, was i.d.R. einen großen Schaden für die betreffende Umgebung bedeutet. Aus diesem Grund müssen insbesondere Druckbehälter für Treibstoffe mit hohen Dampfdrücken, wie Wasserstoff über entsprechende Druckablasseinrichtungen verfügen. Die aus dem Stand der Technik bekannten Druckablasseinrichtungen weisen hierbei jedoch insbesondere den Nachteil auf, dass diese mechanisch auslösen und hierbei von fraglicher Robustheit gegen Fehlauslösungen z.B. bei Erschütterungen sind, da diese Lösungen Elemente aus Glas beinhalten.

Die DE 10 2014 215 719 A1 beschreibt eine Tankeinrichtung mit einem Drucktank zur Speicherung von Kraftstoff und einem Druckregelventil zur Begrenzung eines Kraftstoffdrucks im Drucktank.

### Offenbarung der Erfindung

Gegenstand der Erfindung ist gemäß einem ersten Aspekt ein System mit den Merkmalen des unabhängigen Systemanspruchs sowie gemäß einem zweiten Aspekt ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen System beschrieben sind, selbstverständlich auch im Zusammenhang mit dem erfindungsgemäßen Verfahren und jeweils umgekehrt, sodass bezüglich der Offenbarung zu den einzelnen Erfindungsaspekten stets wechselseitig Bezug genommen wird bzw. werden kann.

Das erfindungsgemäße System zur Druckentlastung eines Druckbehälters dient insbesondere der Möglichkeit einer Abführung eines unter Druck stehenden Treibstoffes bei Unterbrechung einer Spannungsversorgung. Hierbei ist der Vorteil des gegenständlichen Systems insbesondere darin zu sehen, dass durch dessen Anwendung auch ohne Spannungsversorgung ein unter Druck stehender Druckbehälter auf langsame und sichere Weise entleert werden kann, sodass eine Berstgefahr minimiert bzw. eliminiert werden kann.

Das erfindungsgemäße System zur Druckentlastung eines Druckbehälters umfasst hierbei einen Druckbehälter zur Aufnahme eines Treibstoffs, ein Sperrventil zur Absperrung eines Zugangs zwischen dem Druckbehälter und einer Verbraucherseite, ein erstes Sicherheitsventil zur Abführung des Treibstoffs aus dem Druckbehälter sowie ein zweites Sicherheitsventil zur Abführung des Treibstoffs aus dem Druckbehälter. Hierbei zeichnet sich das gegenständliche System dadurch aus, dass das erste Sicherheitsventil als ein stromlos geschlossenes Ventil und das zweite Sicherheitsventil zumindest oberhalb eines Schwellenwertes eines Drucks innerhalb des Druckbehälters als ein stufenlos geöffnetes Ventil gebildet ist.

Das erfindungsgemäße System zur Druckentlastung eines Druckbehälters kann insbesondere in brennstoffzellenbetriebenen Fahrzeugen eingesetzt werden, in denen Wasserstoff als Treibstoff verwendet wird. Ebenso ist das erfindungsgemäße System jedoch auch in verbrennungsmotorbetriebenen Fahrzeugen einsetzbar, in denen Gas und/oder Benzin als Treibstoff verwendet wird. Neben einer Anwendung in Personenkraftwagen oder Lastkraftwagen kann das erfindungsgemäße System hierbei auch in Schiffen oder Flugobjekten oder dergleichen einsetzbar sein. Unter einem stromlos geschlossenen Ventil wird im Rahmen der Erfindung, insbesondere ein aktiv zu öffnendes Ventil verstanden, das in einem Zustand, in dem das Ventil nicht mit Strom versorgt wird, automatisch geschlossen wird. Unter einem stromlos geöffneten Ventil wird hingegen insbesondere ein aktiv zu schließendes Ventil verstanden, das in einem Zustand, in dem das Ventil nicht mit Strom versorgt wird, zumindest oberhalb eines Schwellenwertes eines Drucks innerhalb des Druckbehälters automatisch geöffnet wird bzw. geöffnet bleibt. Der Schwellenwert des Drucks hängt hierbei insbesondere von der Art des Druckbehälters und des verwendeten Treibstoffs sowie der betreffenden Temperatur des Druckbehälters bzw. des Treibstoffs ab. So kann ein geeigneter Schwellenwert für Wasserstoff als Treibstoff beispielsweise zwischen 20 und 200 bar, vorzugsweise zwischen 50 und 100 bar, insbesondere bei 100 bar liegen. Vorzugsweise unterscheiden sich die beiden Sicherheitsventile hinsichtlich ihrer Durchflussrate bzw. Austrittsrate für Treibstoff, wobei insbesondere das zweite Sicherheitsventil eine deutlich geringere Durchflussrate bzw. Austrittsrate für Treibstoff aufweist, als das erste Sicherheitsventil. Vorteilhafterweise ist die Öffnung des zweiten Sicherheitsventils hierbei derart dimensioniert, dass die Austrittsrate des betreffenden Treibstoffs so gering ist, dass keine Gefährdung entsteht. Bei der Verwendung von Wasserstoff als Treibstoff kann die Öffnung des zweiten Sicherheitsventils insbesondere derart dimensioniert sein, dass eine Abführung des Wasserstoffs aus dem Tank in einem Zeitraum von einigen Stunden bis einigen Tagen erfolgt, bzw. der Tank in dieser Zeitspanne zumindest soweit geleert wird, dass der Tank auch in einem Brandfall sicher ist und vor einem Bersten geschützt ist.

Im Rahmen einer bei Stromversorgung sicheren Abführung eines Überdrucks kann erfindungsgemäß insbesondere vorgesehen sein, dass das erste Sicherheitsventil derart ausgebildet ist, dass es während einer Stromversorgung mit einer Mindestmenge an Strom öffenbar und verschließbar ist, wobei ein Öffnungsvorgang insbesondere über den Druck innerhalb des Druckbehälters steuerbar ist. Das stromlos geschlossene Ventil kann hierbei insbesondere derart ausgebildet sein, dass es geöffnet wird, wenn der Druck des Druckbehälters einen Schwellenwert überschreitet. Das stromlos geöffnete Ventil kann hingegen insbesondere derart ausgebildet sein, dass es unter Stromversorgung nicht öffenbar ist und während einer Mindestmenge an Stromversorgung vollständig geschlossen bleibt, insbesondere aktiv geschlossen wird.

Im Rahmen einer besonders kleinbauenden und kompakten Anordnung des erfindungsgemäßen Systems zur Druckentlastung eines Druckbehälters kann erfindungsgemäß vorteilhafterweise vorgesehen sein, dass das erste und zweite Sicherheitsventil in einer Baugruppe zusammengefasst ist, wobei die Baugruppe vorzugsweise zumindest teilweise innerhalb des Druckbehälters angeordnet ist.

Um auf konstruktiv einfach herstellbarer Weise auch in einem stromlosen Zustand eine kontrollierte Abführung eines Überdrucks zu gewährleisten, kann erfindungsgemäß zudem insbesondere vorgesehen sein, dass das zweite Sicherheitsventil einen Gasstrompfad zur kontrollierten Abführung von Treibstoff aufweist, wobei der Gasstrompfad vorzugsweise den Innenraum des Druckbehälters mit der Umgebung verbindet. Eine Einführung eines Gasstrompfades kann hierbei beispielsweise über eine Bohrung oder dergleichen erfolgen.

Im Rahmen einer konstruktiv einfach herstellbaren Ausführung einer besonders sicheren und kontrollierten Abführung eines Treibstoffes kann erfindungsgemäß ferner vorgesehen sein, dass der Gasstrompfad eine gezielt eingebrachte Engstelle zur Begrenzung eines Durchflusses aufweist, wobei die Engstelle derart ausgebildet ist, dass die Durchflussrate einen Wert von 6 cm³/h je I Tankvolumen nicht überschreitet. Der Durchfluss sollte hierbei insbesondere derart begrenzt werden, dass er bei einem maximal vorgesehenen Tankdruck von beispielsweise 700 bar sowie einer zusätzlichen temperaturbedingten Druckerhöhung im Falle eines Tankens eine gesetzlich festgelegte Abführrate von beispielsweise 6 Ncm³/hl nicht überschreitet.

Im Rahmen einer konstruktiv einfach herstellbaren Möglichkeit eines Verschließens des gegenständlichen Gasstrompfades bei einer Stromversorgung kann erfindungsgemäß insbesondere vorgesehen sein, dass das zweite Sicherheitsventil ein Schließelement aufweist, das derart ausgebildet und innerhalb des zweiten Sicherheitsventils angeordnet ist, dass es den Gasstrompfad des zweiten Sicherheitsventils bei Stromversorgung mit einer Mindestmenge an erforderlichem Strom aktiv verschließt. Hierbei kann das Schließelement beispielsweise selbst in Form eines vorzugsweise aktiv bestromten Ventils oder Ventilelementes ausgebildet sein, das beispielsweise direkt ohne Steuerung mit der Energieversorgung verbunden ist und den gegenständlichen Gasstrompfad bei Stromversorgung verschließt. Nur im Falle eines Ausfalls der Strom-, bzw. Energieversorgung bewegt sich das Ventil bzw. das Ventilelement in den stromlosen, offenen Zustand, sodass die erfindungsgemäß vorgesehene sichere und kontrollierte Abführung des Tankinhalts eingeleitet werden kann.

Um stets einen Restbestand an Treibstoff innerhalb des Treibstofftanks bzw. des Druckbehälters zu bewahren, sodass nach einem Wiederherstellen einer Stromversorgung ein direkter Weiterbetrieb eines über den gegenständlichen Treibstofftank angetriebenen Fahrzeugs ermöglicht wird, kann erfindungsgemäß insbesondere vorgesehen sein, dass das zweite Sicherheitsventil ein Federelement zum Ausüben einer Federkraft aufweist, wobei das Federelement vorzugsweise derart ausgebildet und innerhalb des zweiten Sicherheitsventils angeordnet ist, dass bei Unterschreiten eines Schwellenwertes eines Drucks innerhalb des Druckbehälters der Gasstrompfad auch im stromlosen Zustand verschließbar ist. Auf diese Weise ist gewährleistet, dass das zweite Ventil zumindest oberhalb eines Schwellenwertes eines Drucks innerhalb des Druckbehälters als ein stromlos geöffnetes Ventil gebildet ist. Das Federelement kann hierbei insbesondere an dem gegenständlichen Schließelement angeordnet sein. Hierbei kann eine Dimensionierung des Federelementes, insbesondere über eine Berücksichtigung einer anzunehmenden höchsten Temperatur bei einem Brand (beispielsweise 2000 K) und einer anzunehmenden tiefsten Umgebungstemperatur (von beispielsweise 250 K) sowie einem messbaren maximalen Tank-Auslegungsdruck (von beispielsweise 800 bar) erfolgen. Über eine Extrapolation des maximalen Tank-Auslegungsdrucks bei der höchsten anzunehmenden Temperatur auf einen maximalen Tank-Auslegungsdruck bei der tiefsten anzunehmenden Umgebungstemperatur kann dann der maximal erforderliche Druckabbau bestimmt werden (hier beispielsweise 100 bar bei 250 K). Eine Federkraft kann also beispielsweise derart eingestellt werden, dass das zweite Ventil bei einem Druck von weniger als 100 bar im Druckbehälter schließt und somit stets etwas Resttreibstoff innerhalb des Druckbehälters aufbewahrt wird.

Im Rahmen einer besonders sicheren und/oder schnellen Abführung von Treibstoff aus einem Druckbehälter kann erfindungsgemäß ferner vorgesehen sein, dass das erste und/oder zweite Sicherheitsventil mit einer Entlüftungsleitung zur sicheren Abführung eines Treibstoffes verbunden ist. Eine Entlüftungsleitung könnte im Rahmen einer Anordnung des erfindungsgemäßen Systems innerhalb eines Kraftfahrzeugs beispielsweise oben aus einem Fahrzeug, beispielsweise aus einem Fahrzeugdach herausgeführt werden. Alternativ oder kumulativ zu einer Entlüftungsleitung kann auch eine an der Austrittsstelle des ersten und/oder zweiten Sicherheitsventils angeordnete aktive Belüftungsquelle oder dergleichen zur sicheren Abführung eines Treibstoffs vorgesehen sein.

Alternativ oder kumulativ zu einer Entlüftungsleitung bzw. einer aktiven Belüftungsquelle ist es im Rahmen der Erfindung ebenfalls denkbar, dass eine katalytische Oberfläche zur kontrollierten chemischen Umsetzung mit dem abzuführenden Treibstoff vorgesehen ist. Eine geeignete katalytische Oberfläche kann hierbei beispielsweise innerhalb eines Leitungssystems zur Abführung des Treibstoffs oder beispielsweise erst nach einer Abführung des Treibstoffs aus einem Leitungssystem angeordnet sein. Im Rahmen einer besonders kostengünstigen Variante einer Integration einer katalytischen Oberfläche zur kontrollierten chemischen Umsetzung des abzuführen Treibstoffs kann erfindungsgemäß ebenso vorgesehen sein, dass ein Brennstoffzellen-Stack eines brennstoffzellenbetriebenen Fahrzeugs als katalytische Oberfläche fungiert.

Ebenfalls Gegenstand der Erfindung ist zudem ein Verfahren zur Ausführung einer Druckentlastung innerhalb eines Druckbehälters, insbesondere unter Verwendung eines voranstehend beschriebenen Systems. Hierbei umfasst das gegenständliche Verfahren die Schritte eines Erreichens eines stromlosen Zustandes, eines Schließens eines ersten Sicherheitsventils zur Abführung des Treibstoffs aus dem Druckbehälter infolge des Erreichens des stromlosen Zustands sowie eines Öffnens eines zweiten Sicherheitsventils zur Abführung des Treibstoffs aus dem Druckbehälter infolge des Erreichens des stromlosen Zustands. Hierbei zeichnet sich das gegenständliche Verfahren dadurch aus, dass der Treibstoff über das zweite Sicherheitsventil zumindest oberhalb eines Schwellenwertes eines Drucks innerhalb des Druckbehälters kontrolliert aus dem Druckbehälter abgeführt wird. Damit bringt das erfindungsgemäße Verfahren die gleichen Vorteile mit sich, wie sie bereits ausführlich in Bezug auf das erfindungsgemäße System zur Druckentlastung innerhalb eines Druckbehälters beschrieben worden sind.

Ebenfalls Gegenstand der Erfindung ist zudem ein Kraftfahrzeug, umfassend ein voranstehend beschriebenes System.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Fig. 1: eine schematische Darstellung eines erfindungsgemäßen Systems zur Druckentlastung eines Druckbehälters gemäß einem ersten Ausführungsbeispiel,
- Fig. 2: eine schematische Darstellung eines Teilausschnitts des erfindungsgemäßen Systems zur Druckentlastung eines Druckbehälters gemäß einem zweiten Ausführungsbeispiel,
- Fig. 3: eine schematische Darstellung der einzelnen Schritte des erfindungsgemäßen Verfahrens zur Druckentlastung eines Druckbehälters.

In den nachfolgenden Figuren werden für die gleichen technischen Merkmale auch von unterschiedlichen Ausführungsbeispielen die identischen Bezugszeichen verwendet.

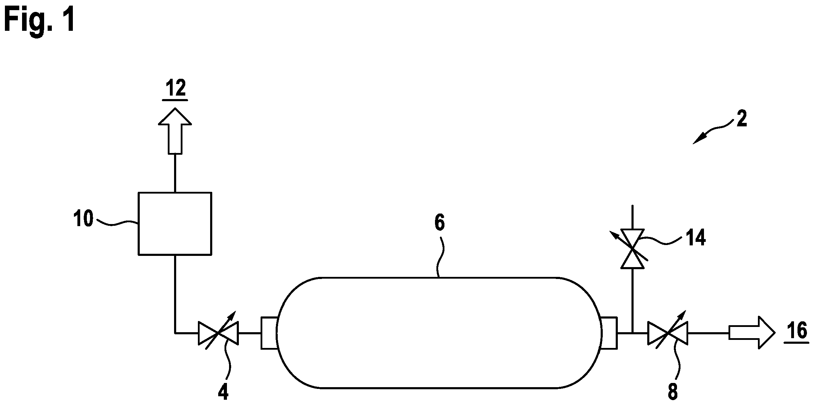

Fig. 1 zeigt eine schematische Darstellung eines erfindungsgemäßen Systems 2 zur Druckentlastung eines Druckbehälters 6 gemäß einem ersten Ausführungsbeispiel.

Hierbei umfasst das gegenständliche System 2 zur Druckentlastung eines Druckbehälters 6 einen Druckbehälter 6 zur Aufnahme eines Treibstoffs, ein Absperrventil 4 zur Absperrung eines Zugangs zwischen dem Druckbehälter 6 und einer Verbraucherseite 12, ein erstes Sicherheitsventil 8 zur Abführung des Treibstoffs aus dem Druckbehälter 6 sowie ein zweites Sicherheitsventil 14 zur Abführung des Treibstoffs aus dem Druckbehälter 6. Das gegenständliche System 2 zeichnet sich hierbei dadurch aus, dass das erste Sicherheitsventil 8 als ein stromlos geschlossenes Ventil und das zweite Sicherheitsventil 14 zumindest oberhalb eines Schwellenwertes eines Druckes innerhalb des Druckbehälters 6 als ein stromlos geöffnetes Ventil gebildet ist. Zur Regulierung eines verbraucherseitigen Drucks ist ferner eine nach dem Absperrventil angeordnete Feinregulierungseinrichtung 10 vorgesehen. Ebenso kann es im Rahmen der Erfindung vorgesehen sein, die Elemente 8 und 14 abzweigend von der Strecke zwischen den Elementen 6 und 4 anzuordnen, so dass die komplette Ventiltechnik nur auf einer Seite des Tanks angeordnet ist.

Das erste Sicherheitsventil 8 ist vorliegend derart ausgebildet, dass es während einer Stromversorgung mit einer Mindestmenge an Strom öffenbar und verschließbar ist, wobei ein Öffnungsvorgang insbesondere über den Druck innerhalb des Druckbehälters 6 steuerbar ist.

Das zweite Sicherheitsventil 14 besitzt hierbei vorzugsweise eine deutlich geringere Durchflussrate bzw. Austrittsrate für den Treibstoff, als das erste Sicherheitsventil 8. Hierbei besitzt das zweite Sicherheitsventil 14 einen vorliegend nicht dargestellten Gasstrompfad zur kontrollierten Abführung von Treibstoff, der vorzugsweise den Innenraum des Druckbehälters 6 mit der Umgebung verbindet und eine gezielt eingebrachte Engstelle zur Begrenzung eines Durchflusses aufweist, die vorzugsweise derart ausgebildet ist, dass die Durchflussrate einen Wert von 6 Ncm³/hl nicht überschreitet.

Ferner weist das zweite Sicherheitsventil 14 ein vorliegend ebenfalls nicht explizit dargestelltes Schließelement auf, das vorzugsweise derart ausgebildet und innerhalb des zweiten Sicherheitsventils 14 angeordnet ist, dass es den Gasstrompfad des zweiten Sicherheitsventils 14 bei Stromversorgung mit einer Mindestmenge an erforderlichen Strom aktiv verschließt.

Zusätzlich weist das zweite Sicherheitsventil 14 ein hier nicht gezeigtes Federelement zum Ausüben einer Federkraft auf, das vorzugsweise derart ausgebildet und innerhalb des zweiten Sicherheitsventils 14 angeordnet ist, dass bei Unterschreiten eines Schwellenwertes eines Drucks innerhalb des Druckbehälters 14 der Gasstrompfad auch im stromlosen Zustand verschließbar ist und somit stets ein Restbestand an Treibstoff innerhalb des Treibstofftanks 6 bewahrt werden kann. Auf diese Weise ist nach einem Wiederherstellen einer Stromversorgung ein direkter Weiterbetrieb eines über den gegenständlichen Treibstofftank 6 angetriebenen Fahrzeugs möglich.

Zur sicheren Abführung eines Treibstoffes ist es erfindungsgemäß ferner denkbar, dass das erste und/oder zweite Sicherheitsventil 8, 14 mit einer Entlüftungsleitung verbunden ist, die beispielsweise zusätzlich eine katalytische Oberfläche zur kontrollierten chemischen Umsetzung des abzuführenden Treibstoffs aufweisen kann, sodass dieser ohne Gefahr an die Umgebung abgegeben werden kann.

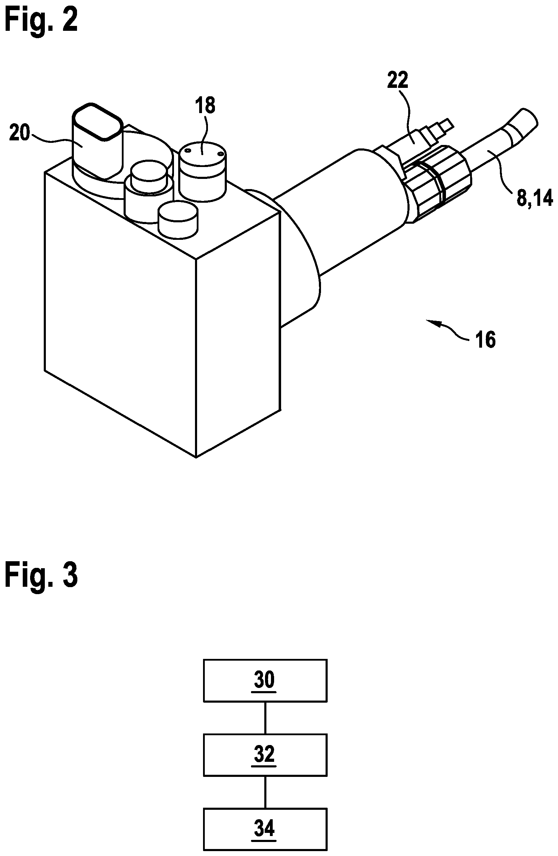

Fig. 2 zeigt eine schematische Darstellung eines Teilausschnitts des erfindungsgemäßen Systems 2 zur Druckentlastung eines Druckbehälters 6 gemäß einem zweiten Ausführungsbeispiel. Gemäß dem zweiten Ausführungsbeispiel ist das erste und zweite Sicherheitsventil 8, 14 in Form einer einzigen Baugruppe 16 zusammengefasst, wobei die Baugruppe 16 vorliegend zumindest teilweise innerhalb des Druckbehälters 6 angeordnet ist.

In dem vorliegenden Teilausschnitt ist vorliegend nur die Baugruppe 16 dargestellt, die neben dem ersten und zweiten Sicherheitsventil 8 und 14 noch einen Temperatursensor 22, einen Drucksensor 18 sowie ein elektrisches Anschlusselement 20 aufweist.

Fig. 3 zeigt eine schematische Darstellung der einzelnen Schritte des erfindungsgemäßen Verfahrens zur Druckentlastung des Druckbehälters 6.

Hierbei umfasst das gegenständliche Verfahren zur Ausführung einer Druckentlastung innerhalb eines Druckbehälters 6 die Schritte eines Erreichens 30 eines stromlosen Zustandes, eines Schließens 32 eines ersten Sicherheitsventils 8 zur Abführung des Treibstoffs aus dem Druckbehälter 6 infolge des Erreichens 30 des stromlosen Zustandes sowie eines Öffnens 34 eines zweiten Sicherheitsventils 14 zur Abführung des Treibstoffs aus dem Druckbehälter 6 infolge des Erreichens 30 des stromlosen Zustands. Das gegenständliche Verfahren zeichnet sich hierbei dadurch aus, dass der Treibstoff über das zweite Sicherheitsventil 14 zumindest oberhalb eines Schwellenwertes eines Drucks innerhalb des Druckbehälters 6 kontrolliert aus dem Druckbehälter abgeführt wird.

Mittels des gegenständlichen Systems 2 bzw. des gegenständlichen Verfahrens ist es insbesondere möglich, einen Treibstoff aus einem unter Druck stehenden Druckbehälter 6 in einer Notfallsituation auch bei Unterbrechung einer Spannungsversorgung auf langsame und sichere Weise abzuführen und somit die Gefahr eines Berstens des betreffenden Druckbehälters 6 zu minimieren bzw. zu eliminieren.

## Patentansprüche

1. System (2) zur Druckentlastung eines Druckbehälters (6), umfassend:
- einen Druckbehälter (6) zur Aufnahme eines Treibstoffs,
- ein Absperrventil (4) zur Absperrung eines Zugangs zwischen dem Druckbehälter (6) und einer Verbraucherseite (12),
- ein erstes Sicherheitsventil (8) zur Abführung des Treibstoffs aus dem Druckbehälter (6),
- ein zweites Sicherheitsventil (14) zur Abführung des Treibstoffs aus dem Druckbehälter (6),
wobei das erste Sicherheitsventil (8) als ein stromlos geschlossenes Ventil und das zweite Sicherheitsventil (14) zumindest oberhalb eines Schwellenwertes eines Druckes innerhalb des Druckbehälters (6) als ein stromlos geöffnetes Ventil gebildet ist.

2. System (2) nach Anspruch 1,
**dadurch gekennzeichnet,**
**dass** das erste Sicherheitsventil (8) derart ausgebildet ist, dass es während einer Stromversorgung mit einer Mindestmenge an Strom öffenbar und verschließbar ist, wobei ein Öffnungsvorgang insbesondere über den Druck innerhalb des Druckbehälters (6) steuerbar ist.

3. System (2) nach Anspruch 1 oder 2,
**dadurch gekennzeichnet,**
**dass** das erste und zweite Sicherheitsventil (8, 14) in einer Baugruppe (16) zusammengefasst sind, wobei die Baugruppe (16) vorzugsweise zumindest teilweise innerhalb des Druckbehälters (6) angeordnet ist.

4. System (2) nach einem der vorangehenden Ansprüche,
**dadurch gekennzeichnet,**
**dass** das zweite Sicherheitsventil (14) einen Gasstrompfad zur kontrollierten Abführung von Treibstoff aufweist, wobei der Gasstrompfad vorzugsweise den Innenraum des Druckbehälters (6) mit der Umgebung verbindet.

5. System (2) nach Anspruch 4,
**dadurch gekennzeichnet,**
**dass** der Gasstrompfad eine gezielt eingebrachte Engstelle zur Begrenzung eines Durchflusses aufweist, wobei die Engstelle derart ausgebildet ist, dass die Durchflussrate einen Wert von 6 Ncm³/hl nicht überschreitet.

6. System (2) nach einem der vorangehenden Ansprüche,
**dadurch gekennzeichnet,**
**dass** das zweite Sicherheitsventil (14) ein Schließelement aufweist, das derart ausgebildet und innerhalb des zweiten Sicherheitsventils (14) angeordnet ist, dass es den Gasstrompfad des zweiten Sicherheitsventils (14) bei Stromversorgung mit einer Mindestmenge an erforderlichem Strom aktiv verschließt.

7. System (2) nach einem der vorangehenden Ansprüche,
**dadurch gekennzeichnet,**
**dass** das zweite Sicherheitsventil (14) ein Federelement zum Ausüben einer Federkraft aufweist, wobei das Federelement derart ausgebildet und innerhalb des zweiten Sicherheitsventils (14) angeordnet ist, dass beim Unterschreiten eines Schwellenwertes eines Druckes innerhalb des Druckbehälters (6) der Gasstrompfad auch im stromlosen Zustand verschließbar ist.

8. System (2) nach einem der vorangehenden Ansprüche,
**dadurch gekennzeichnet,**
**dass** das erste und/oder zweite Sicherheitsventil (8, 14) mit einer Entlüftungsleitung zur sicheren Abführung eines Treibstoffes verbunden sind.

9. System (2) nach einem der vorangehenden Ansprüche,
**dadurch gekennzeichnet,**
**dass** eine katalytische Oberfläche zur kontrollierten chemischen Umsetzung mit dem abzuführenden Treibstoff vorgesehen ist.

10. Verfahren zur Ausführung einer Druckentlastung innerhalb eines Druckbehälters (6), insbesondere unter Verwendung eines Systems (2) nach einem der Ansprüche 1 bis 9, umfassend die Schritte:
- Erreichen (30) eines stromlosen Zustandes,
- Schließen (32) eines ersten Sicherheitsventils (8) zur Abführung des Treibstoffs aus dem Druckbehälter (6) infolge des Erreichens (30) des stromlosen Zustands,
- Öffnen (34) eines zweiten Sicherheitsventils (14) zur Abführung des Treibstoffs aus dem Druckbehälter (6) infolge des Erreichens (30) des stromlosen Zustands,
wobei der Treibstoff über das zweite Sicherheitsventil (14) zumindest oberhalb eines Schwellenwertes eines Druckes innerhalb des Druckbehälters (6) kontrolliert aus dem Druckbehälter (6) abgeführt wird.

11. Kraftfahrzeug, umfassend ein System (2) nach einem der Ansprüche 1 bis 9.

## Claims

1. System (2) for releasing pressure in a pressure vessel (6), comprising:
- a pressure vessel (6) for holding a fuel,
- a shut-off valve (4) for shutting off an access between the pressure vessel (6) and a consumer side (12),
- a first safety valve (8) for discharging the fuel out of the pressure vessel (6),
- a second safety valve (14) for discharging the fuel from the pressure vessel (6),
wherein the first safety valve (8) is formed as a normally closed valve and the second safety valve (14) is formed as a valve that is normally open, at least above a threshold value of a pressure within the pressure vessel (6) .

2. System (2) according to Claim 1,
**characterized in that**
the first safety valve (8) is formed in such a way that it can be opened and closed when a minimum amount of power is supplied, wherein an opening process can be controlled in particular via the pressure within the pressure vessel (6).

3. System (2) according to Claim 1 or 2,
**characterized in that**
the first and second safety valve (8, 14) are combined in an assembly (16), the assembly (16) preferably being arranged at least partly within the pressure vessel (6).

4. System (2) according to one of the preceding claims,
**characterized in that**
the second safety valve (14) has a gas flow path for the controlled discharge of fuel, wherein the gas flow path preferably connects the interior of the pressure vessel (6) to the environment.

5. System (2) according to Claim 4,
**characterized in that**
the gas flow path has a deliberately introduced constriction for limiting a flow, wherein the constriction is formed in such a way that the flow rate does not exceed a value of 6 Ncm³/hl.

6. System (2) according to one of the preceding claims,
**characterized in that**
the second safety valve (14) has a closing element which is designed and arranged within the second safety valve (14) in such a way that it actively closes the gas flow path of the second safety valve (14) when supplied with a minimum quantity of required power.

7. System (2) according to one of the preceding claims,
**characterized in that**
the second safety valve (14) has a spring element for exerting a spring force, wherein the spring element is formed and arranged within the second safety valve (14) in such a way that when a pressure within the pressure vessel (6) falls below a threshold value, the gas flow path can be closed even in the de-energized state.

8. System (2) according to one of the preceding claims,
**characterized in that**
the first and/or second safety valve (8, 14) are/is connected to a vent line for the safe discharge of a fuel.

9. System (2) according to one of the preceding claims,
**characterized in that**
a catalytic surface is provided for controlled chemical reaction with the fuel to be discharged.

10. Method for carrying out a release of pressure within a pressure vessel (6), in particular by using a system (2) according to one of Claims 1 to 9, comprising the steps:
- reaching (30) a de-energized state,
- closing (32) a first safety valve (8) for discharging the fuel from the pressure vessel (6) as a result of reaching (30) the de-energized state,
- opening (34) a second safety valve (14) for discharging the fuel from the pressure vessel (6) as a result of reaching (30) the de-energized state,
wherein
the fuel is discharged from the pressure vessel (6) in a controlled manner via the second safety valve (14), at least above a threshold value of a pressure within the pressure vessel (6).

11. Motor vehicle comprising a system (2) according to one of Claims 1 to 9.

## Revendications

1. Système (2) de libération de pression dans un récipient sous pression (6), comprenant :
- un récipient sous pression (6) destiné à recevoir un combustible ;
- une soupape de déverrouillage (4) destinée à débloquer un accès entre le récipient sous pression (6) et un côté consommateur (12) ;
- une première soupape de sécurité (8) destinée à évacuer le combustible hors du récipient sous pression (6) ;
- une deuxième soupape de sécurité (14) destinée à évacuer le combustible hors du récipient sous pression (6) ;
dans lequel :
la première soupape de sécurité (8) prend la forme d'une soupape fermée sans courant et la deuxième soupape de sécurité (14) prend la forme d'une soupape ouverte sans courant au moins au-dessus d'une valeur seuil de pression à l'intérieur du récipient sous pression (6).

2. Système (2) selon la revendication 1, **caractérisé en ce que** la première soupape de sécurité (8) est réalisée de telle sorte qu'elle peut être ouverte et fermée avec une quantité de courant minimale pendant une alimentation en courant, dans lequel un processus d'ouverture peut notamment être commandé au travers d'une pression exercée à l'intérieur du récipient sous pression (6).

3. Système (2) selon la revendication 1 ou 2, **caractérisé en ce que** la première et deuxième soupape de sécurité (8, 14) sont regroupées dans un module de construction (16), dans lequel le module de construction (16) est de préférence disposé au moins en partie à l'intérieur du récipient sous pression (6).

4. Système (2) selon l'une quelconque des revendications précédentes, **caractérisé en ce que** la deuxième soupape de sécurité (14) comporte un chemin de flux gazeux destiné à évacuer de façon contrôlée le combustible, dans lequel le chemin de flux gazeux relie de préférence l'espace intérieur du récipient sous pression (6) à l'environnement.

5. Système (2) selon la revendication 4, **caractérisé en ce que** le chemin de flux gazeux comporte un goulot de rétrécissement placé de façon ciblée pour limiter un débit, dans lequel le goulot est réalisé de telle sorte que le débit ne dépasse pas une valeur de 6 Ncm³/hl.

6. Système (2) selon l'une quelconque des revendications précédentes, **caractérisé en ce que** la deuxième soupape de sécurité (14) comporte un élément de fermeture réalisé de telle sorte et disposé à l'intérieur de la deuxième soupape de sécurité (14) qu'il ferme activement le chemin de flux gazeux de la deuxième soupape de sécurité (14) en cas d'alimentation en courant avec une quantité minimale de courant nécessaire.

7. Système (2) selon l'une quelconque des revendications précédentes, **caractérisé en ce que** la deuxième soupape de sécurité (14) comporte un élément de ressort permettant d'exercer une force de ressort, dans lequel l'élément de ressort est réalisé de telle sorte et disposé à l'intérieur de la deuxième soupape de sécurité (14) qu'en cas de passage en dessous d'une valeur seuil de pression à l'intérieur du récipient sous pression (6), le chemin de flux gazeux peut également être refermé à l'état sans courant.

8. Système (2) selon l'une quelconque des revendications précédentes, **caractérisé en ce que** la première et/ou deuxième soupape de sécurité (8, 14) sont reliées à une conduite de purge en vue d'assurer une évacuation sûre d'un combustible.

9. Système (2) selon l'une quelconque des revendications précédentes, **caractérisé en ce qu'**une surface catalytique est prévue avec le combustible à évacuer pour la décomposition chimique contrôlée.

10. Procédé pour la mise en œuvre d'une libération de pression à l'intérieur d'un récipient sous pression (6), notamment en utilisant un système (2) selon l'une quelconque des revendications 1 à 9, comprenant les étapes suivantes :
- atteinte (30) d'un état sans courant ;
- fermeture (32) d'une première soupape de sécurité (8) pour l'évacuation du combustible hors du récipient sous pression (6) une fois (30) l'état sans courant atteint ;
- ouverture (34) d'une deuxième soupape de sécurité (14) pour l'évacuation du combustible hors du récipient sous pression (6) une fois atteint (30) l'état sans courant ;
dans lequel le combustible est évacué de façon contrôlée hors du récipient sous pression (6) via la deuxième soupape de sécurité (14) au moins au-dessus d'une valeur seuil de pression régnant à l'intérieur du récipient sous pression (6).

11. Véhicule automobile, comprenant un système (2) selon l'une quelconque des revendications 1 à 9.
